(19) Europäisches Patentamt
European Patent Office
Office européen des brevets

(11) **EP 1 775 965 A1**

(12) **EUROPEAN PATENT APPLICATION**

(43) Date of publication:
**18.04.2007 Bulletin 2007/16**

(51) Int Cl.:
**H04N 9/73** (2006.01)

(21) Application number: **06121982.0**

(22) Date of filing: **09.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.10.2005 KR 20050095617**
**16.02.2006 KR 20060015092**

(71) Applicant: **SAMSUNG ELECTRONICS CO., LTD.**
**Suwon-si**
**Gyeonggi-do 442-742 (KR)**

(72) Inventors:
• **Ahn, Jae-Hong**
**Bundang-gu, Seongnam-si (KR)**
• **Park, Kil-soo**
**Yeongtong-gu, Gyeonggi-do, Suwon-si (KR)**

(74) Representative: **Waddington, Richard**
**Appleyard Lees,**
**15 Clare Road**
**Halifax HX1 2HY (GB)**

(54) **Display apparatus and control method thereof**

(57) A display apparatus includes a display unit (70); a signal processing unit (30) which processes an image signal to be displayed on the display unit (70); a colour transforming unit (50) which adjusts a white balance of the image signal input from the signal processing unit (30) within a colour area defined by a set of adjacent colours in a colour space; and a controlling unit (90) which controls the colour transforming unit (50) to perform colour-transformation on only a white colour within the colour area of colours of the image signal in order to adjust the white balance of the image signal.

FIG. 1

EP 1 775 965 A1

**Description**

The present invention relates to a display apparatus and a control method thereof, and more particularly, to a display apparatus with improved white balance of an image signal and a control method thereof.

In general, display apparatuses, especially, colour display apparatuses, are being widely used for equipments required to provide visual information to users, such as a television (TV), a digital TV (DTV), a thin film transistor (TFT) monitor or TV, a colour printer, a digital camera, a projector, a mobile phone, etc.

In a display apparatus, display conditions of an image displayed on the display apparatus have been conventionally adjusted by processing attributes, such as hue, brightness, saturation and the like, of an image signal applied to the display apparatus. For example, white balance of the image displayed on the display apparatus may be adjusted by adjusting white colour by combination of colours of the image signal applied to the display apparatus.

However, when the white balance is adjusted in such a conventional display apparatus, there arises a problem of change of hue and/or saturation of all colours of the image displayed on a display of the display apparatus. For example, if hue for blue colour is increased to increase colour temperature of white colour of the image displayed on the display apparatus, colour temperature of all colours of the image displayed on the display apparatus is changed. That is, even though a user tries to change only the colour temperature of white colour, there arises a problem of change of all colours.

The present invention provides a display apparatus, which is capable of adjusting white balance of an image signal by changing only white colour distributed in a colour area, and a control method thereof.

According to the present invention there is provided an apparatus and method as set forth in the appended claims. Preferred features of the invention will be apparent from the dependent claims, and the description which follows.

According to an aspect of the present invention, there is provided a display apparatus comprising a display unit adapted to display an image, comprising: a signal input unit operable to receive an image signal input; a signal processing unit for processing the image signal such that the image signal can be displayed on the display unit; a colour transforming unit for adjusting white balance of the image signal input from the signal processing unit within a colour area defined by a set of plurality of adjacent colours in a colour space; and a controlling unit for controlling the colour transforming unit to perform colour-transformation on only a white colour within the colour area of colours of the image signal in order to adjust the white balance of the image signal.

Preferably, the colour transforming unit is operable to set a colour within the colour area to be a reference colour, and to determine a degree of colour-transformation of other colours within the colour area based on a degree of colour-transformation of the reference colour.

Preferably, the colour space is a YCbCr colour space.

Preferably, the colour area has an elliptical shape making an acute angle with coordinates of red and blue colours, with a colour temperature axis as a major axis on the YCbCr colour space.

Preferably, when the white balance of the image signal is adjusted, the controlling unit is operable to transform the reference colour such that the reference colour is adjacent to the coordinate of blue colour within the colour area in order to increase the colour temperature of the white colour, and to transform the reference colour such that the reference colour is adjacent to the coordinate of red colour within the colour area in order to decrease the colour temperature of the white colour.

Preferably, the controlling unit is operable to receive a control signal to adjust the colour temperature of the white colour from an external apparatus and to control the colour transforming unit to adjust the white balance according to the received control signal.

Preferably, the controlling unit is operable to cause a pattern image to be displayed on the display unit and to determine an adjustment condition of the white balance of the image signal adjusted in the colour transforming unit according to change of the pattern image.

According to another aspect of the present invention, there is provided a control method of a display apparatus comprising a display unit on which an image is displayable, comprising: receiving an image signal; processing the image signal such that the image signal can be displayed on the display unit; and adjusting white balance of the processed image signal by adjusting a white colour of the processed image signal within a colour area defined by a set of plurality of adjacent colours in a colour space.

Preferably, the adjusting the white balance comprises: setting a colour within the colour area to be a reference colour and determining a degree of colour-transformation of other colours within the colour area based on a degree of colour-transformation of the reference colour; and colour-transforming a colour within the colour area depending on the determined degree of colour-transformation.

Preferably, the adjusting the white balance comprises: transforming the reference colour such that the reference colour is adjacent to the coordinate of blue colour within the colour area in order to increase the colour temperature of the white colour; and transforming the reference colour such that the reference colour is adjacent to the coordinate of red colour within the colour area in order to decrease the colour temperature of the white colour.

For a better understanding of the invention, and to show how embodiments of the same may be carried into effect, reference will now be made, by way of example, to the accompanying diagrammatic drawings in which:

FIG. 1 is a control block diagram of a display apparatus according to an exemplary embodiment of the present invention;

FIG. 2A is a view illustrating a colour space and a colour area in three dimensions;

FIG. 2B is a view illustrating a section of a colour space and a colour area; and

FIG. 3 is a control flow chart of the display apparatus according to the exemplary embodiment of the present invention.

Reference will now be made in detail to exemplary embodiments of the present invention, examples of which are illustrated in the accompanying drawings.

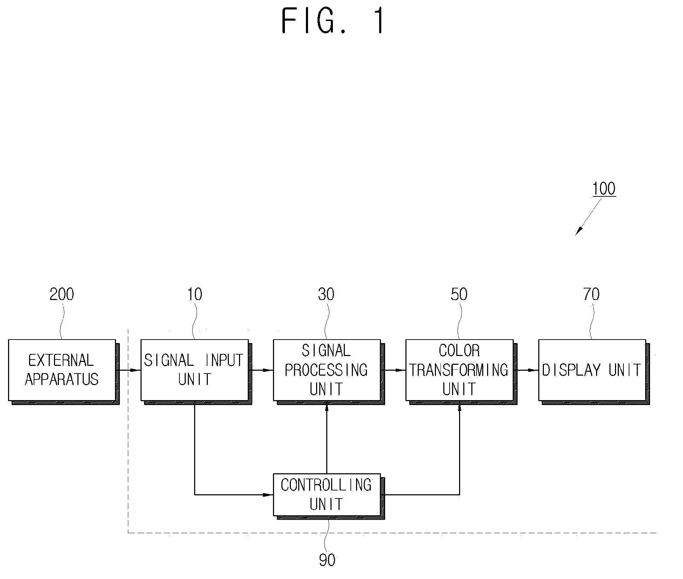

FIG. 1 is a control block diagram of a display apparatus according to an exemplary embodiment of the present invention.

As shown in FIG. 1, a display apparatus 100 according to the exemplary embodiment of the present invention includes a display unit 70 on which an image is displayed, a signal input unit 10, a signal processing unit 30, a colour transforming unit 50 for transforming an image signal processed in the signal processing unit 30, and a controlling unit 90 for controlling these components.

The display unit 70 receives the image signal from the colour transforming j unit 50 and displays an image on a screen. The display unit 70 includes a display module (not shown) on which the image is displayed and a module driver (not shown) for processing the image signal input from the colour transforming unit 50 to enable the image to be displayed on the display module. The display module may include various types of display modules such as a Cathode Ray Tube (CRT), a Digital Light Processing (DLP) projector, a Liquid Crystal Display (LCD), a Plasma Display Panel (PDP) and the like. In case where the display module is a DLP projector, the module driver includes an optical engine. In case where the display module is an LCD, the module driver includes a printed circuit board for converting the image signal input from the colour transforming unit 50 into a data signal and a gate signal. Similarly, according to the type of display module, the display unit 70 may have a configuration corresponding to the module driver.

The signal input unit 10 receives an image signal and outputs the received image signal to the signal processing unit 30. It is to be understood that the signal input unit 10 may have different configurations according to the type of display module. For example, when the signal processing unit 30 processes a digital image signal, the signal input unit 10 may include an analog-to-digital (A/D) converter for converting an analog image signal into the digital image signal, and may further include separate components for supporting a Low Voltage Differential Signaling (LVDS) or Transition Minimized Differential Signaling (TMDS) interface for supporting input of the digital image signal. In addition, when the display apparatus 100 receives a TV broadcasting signal, the signal input unit 10 may include a tuner.

The signal input unit 10 may further include an input terminal through which an instruction signal is received from an external apparatus 200 to the controlling unit 90, which will be described later, and a pattern image having a pattern is received when white balance is adjusted. In this case, the pattern image may be an image on the basis of which it is determined whether the white balance is properly adjusted. For example, the pattern image may include a monochromatic image or a polychromatic image having a pattern. In this exemplary embodiment, the pattern image may be received from the external apparatus 200 or may be pre-stored in an internal memory (not shown) of the display apparatus 100. In addition, the image on the basis of which it is determined whether the white balance is properly adjusted may include an image signal received from a certain image signal source as well as the pattern image. In the following description, for the purpose of convenience of explanation, it is assumed that the pattern image having the pattern is included in an image according to an image signal.

The signal processing unit 30 converts the image signal input through the signal input unit 10 into an image signal which can be displayed by the display unit 70. The signal processing unit 30 may have different configurations according to the type of display module as mentioned above. For example, if the display module is an LCD, a PDP, or a DLP, the signal processing unit 30 may include a scaler (not shown) for scaling a digital image signal. If the display module is a CRT, the signal processing unit 30 may include an amplifying unit (not shown) for amplifying an image signal input through the signal input unit 10, vertical and horizontal deflecting units (not shown) for deflecting electron beams based on vertical and horizontal synchronization signals, etc. In addition, the signal processing unit 30 may further include a frame buffer (not shown) for temporarily storing an image signal input from the signal input unit 10 and then outputting the stored image signal to the scaler.

The controlling unit 90 controls the signal processing unit 30, the colour transforming unit 50 and the signal input unit 10. In this exemplary embodiment, upon receiving an instruction signal to adjust white balance from the external apparatus 200 via the signal input unit 10 or receiving an instruction signal to adjust white balance according to a program pre-stored in the memory, the controlling unit 90 controls the colour transforming unit 50 to perform colour-transformation on the image signal output from the signal processing unit 30. In this case, the controlling unit 90 detects ambient illumination of the display apparatus 100 and can adjust the white balance based on a result of the detection or depending on conditions of setting of the display apparatus 100.

The colour transforming unit 50 performs colour-transformation on the image signal output from the signal processing unit 30 such that colours distributed in a white colour area CA defined by a set of plurality of colours on a colour space CS of colours displayed on the display unit 70 are colour-transformed within the white colour area CA. As used herein, the white colour area CA refers to an area centered at an origin (center) of a section of the colour space CS.

As used herein, the colour space CS, which is employed for logical expression of colours, refers to a space in which all colours are indicated on a three-dimensional coordinate system. It is preferable but not necessary that the colour space CS is a YCbCr colour space in which brightness data are separated from hue data. In this exemplary embodiment, a CIELAB(L*a*b*) colour space or CIELCH (L*C*h*) colour space suggested by Commission International de Eclairage (CIE) may be employed as the colour space CS. However, it is to be understood that different colour spaces may also be employed as the colour space CS without departing from the spirit of the present invention.

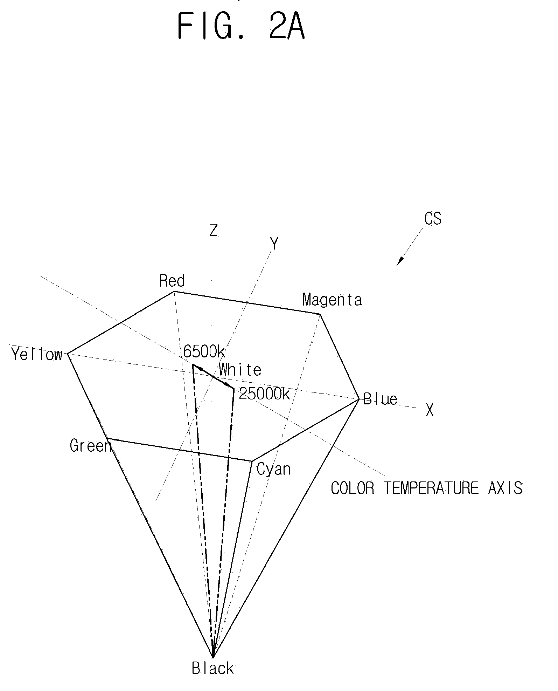

FIG. 2A shows a three-dimensional x-y-z coordinate system of a YCbCr colour space CS defined according to a relationship among brightness, hue and saturation of colours. In this coordinate system, change of a phase means change of hue, change of a distance from an origin means change of saturation, and a change in a z-axis around the origin means change of brightness. In this exemplary embodiment, the colour space CS is a six-axis colour space defined by six primary colours: Red (R), Yellow (Y), Green (G), Cyan (C), Blue (B) and Magenta (M).

The colour area CA is defined by a set of colours on the colour space CS. In this case, the colour transforming unit 50 recognizes a white colour area according to a geometrical equation of the colour area CA on the three-dimensional coordinate system. For example, if the colour area CA has an elliptical shape, the colour transforming unit 50 can recognize the white colour area CA according to an elliptical equation.

In this exemplary embodiment, an example where the colour area CA is parallel to an x-y plane, that is, brightness of colour is not changed in colour-transformation on the colour area CA, will be described. In this case, the colour transforming unit 50 performs colour-transformation on a colour difference signal, which expresses hue and saturation of colour, included in the image signal output from the signal processing unit 30, thus changing the hue and/or saturation of colour expressed by the colour difference signal.

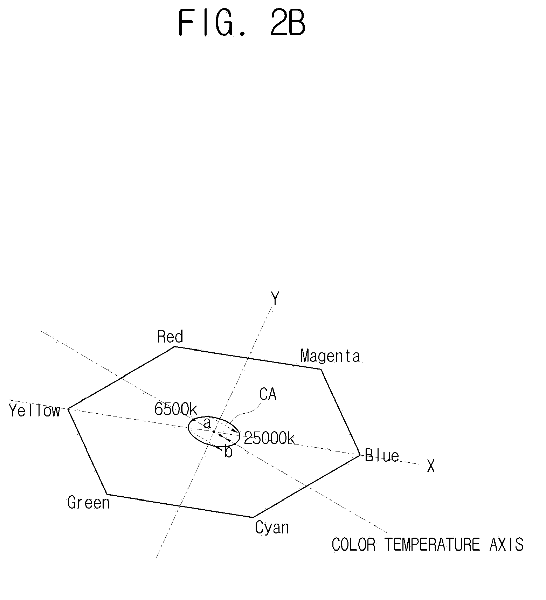

In this exemplary embodiment, the colour area CA has an elliptical shape as an example, as shown in FIG. 2B. In this case, it is preferable but not necessary that the elliptical shape has a colour temperature axis, which is a basis of change of colour temperature, as a major axis. In this case, particularly the white colour area CA makes an acute angle with each of coordinates corresponding to red and blue colours. Accordingly, the colour temperature increases as it gets close to a coordinate adjacent to the blue colour, i.e., 25000K, while the colour temperature decreases as it gets close to a coordinate adjacent to the red colour, i.e., 6500K. In other words, the colour transforming unit 50 can change the colour temperature by performing colour-transformation on values of colour difference signals Cb and Cr under control of the controlling unit 90. Specifically, the colour temperature increases as a value of Cb having information on the blue colour increases, while the colour temperature decreases as a value of Cr having information on the red colour increases.

The image signal input from the signal processing unit 30 is separated into a brightness signal and a colour difference signal. Then, the colour transforming unit 50 transforms a coordinate of colour corresponding to the colour difference signal into a coordinate according to control of the controlling unit 90. In this case, the colour transforming unit 50 colour-transforms a coordinate (x, y) (point a in FIG. 2B) into a coordinate (x', y') (point b in FIG. 2B).

The coordinate (x', y') can be obtained according to the following equation:

$$\begin{pmatrix} x' \\ y' \end{pmatrix} = \begin{pmatrix} Gx \times x \\ Gy \times y \end{pmatrix} + \begin{pmatrix} Ox \\ Oy \end{pmatrix}$$

where Gx is a gain value of x, Gy is a gain value of y, Ox is an offset value of x, and Oy is an offset value of y.

In this exemplary embodiment, it is preferable but not necessary that, if the image signal displayed on the display unit 70 has a low gray scale, the coordinate (x', y') is determined by the offset values, and, if the image signal displayed on the display unit 70 has a high gray scale, the coordinate (x', y') is determined by the gain values.

The colour transforming unit 50 may set a colour within the white colour area CA to be a reference colour and determine a degree of colour-transformation of other colours within the colour area CA based on a degree of colour-transformation of the reference colour. In other words, when the reference colour within the elliptical colour area is transformed according to a control signal from the controlling unit 90, other colours within the colour area CA, except the reference colour, are transformed at a ratio. In this case, the degree of colour-transformation depends on a shape of the colour area.

In addition, when the white balance of the image signal is adjusted according to a control signal from the controlling unit 90, the colour transforming unit 50 can transform the reference colour such that the reference colour is adjacent to the coordinate of blue colour within the colour area CA in order to increase the colour temperature of the white colour. Moreover, the colour transforming unit 50 can transform the reference colour such that the reference colour is adjacent to the coordinate of red colour within the colour area CA in order to decrease the colour temperature of the white colour.

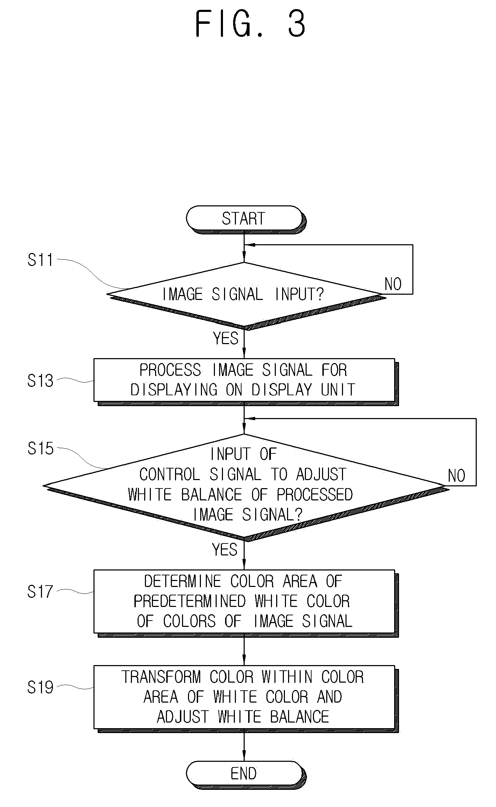

FIG. 3 is a control flow chart of the display apparatus 100 according to the exemplary embodiment of the present invention.

Referring to FIG. 3, the display apparatus 100 receives an image signal through the signal input unit 10 at operation S11. This image signal includes a pattern image output from a pattern output apparatus as well as an image signal output from an image source such as a broadcasting station, a DVD, a VCR and so on. Next, the signal processing unit 30 processes the image signal input through the signal input unit 10 such that the image signal can be displayed on the display unit 70 at operation S13, and output the processed image signal to the colour transforming unit 50.

Next, upon receiving a control signal to adjust white balance of the image signal from the controlling unit 90 at operation S15, the colour transforming unit 50 adjusts the white balance by performing colour-transformation on a colour within a white colour area CA of the image signal at operation S19. Specifically, according to a control signal from the controlling unit 90, the colour transforming unit 50 determines the white colour area CA at operation S17, distinguishes between a colour within the determined colour area CA and other colours, and adjusts the white balance of the image signal by performing colour-transformation on only the colour within the white colour area CA at operation S19.

As described above, when the white balance of the image signal is adjusted, the display apparatus 100 adjusts only the colour within the white colour area CA. That is, the display apparatus 100 of the present invention adjusts only the colour within the colour area CA without adjusting other colours, while the conventional display apparatus changes all colours displayed on the display unit 70 when the white balance is adjusted. Accordingly, colours displayed on the display unit 70 can be prevented from being changed as a whole regardless of users' intentions.

As discussed above, the exemplary embodiments of the present invention provides a display apparatus, which is capable of adjusting white balance of an image signal by changing only white colour distributed in a colour area, and a control method thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A display apparatus comprising:

   a display unit (70);
   a signal processing unit (30) which is operable to process an image signal to be displayed on the display unit (70);
   a colour transforming unit (50) which is operable to adjust a white balance of the image signal within a colour area defied by a set of adjacent colours in a colour space; and
   a controlling unit (90) which is operable to control the colour transforming unit (50) to perform colour-transformation on only a white colour within the colour area of colours of the image signal in order to adjust the white balance of the image signal.

**2.** The display apparatus according to claim 1, wherein the colour transforming unit (50) is operable to set a colour within the colour area to be a reference colour, and to determine a degree of colour-transformation of other colours within the colour area based on a degree of colour-transformation of the reference colour.

**3.** The display apparatus according to claim 1 or claim 2, wherein the colour space is a YCbCr colour space.

**4.** The display apparatus according to any preceding claim, wherein the colour area has an elliptical shape making an acute angle with coordinates of red and blue colours, with a colour temperature axis as a major axis on the YCbCr colour space.

**5.** The display apparatus according to claim 4, wherein, if the white balance of the image signal is adjusted, the controlling unit (90) is operable to transform the reference colour so that the reference colour is adjacent to the coordinate of blue colour within the colour area to increase the colour temperature of the white colour, and to transform the reference colour so that the reference colour is adjacent to the coordinate of red colour within the colour area to decrease the colour temperature of the white colour.

**6.** The display apparatus according to claim 5, wherein the controlling unit (90) is operable to receive a control signal to adjust the colour temperature of the white colour from an external apparatus to and control the colour transforming unit (50) to adjust the white balance according to the control signal.

**7.** The display apparatus according to claim 6, wherein the controlling unit (90) causes a pattern image to be displayed on the display unit (70) and determines an adjustment condition of the white balance of the image signal adjusted in the colour transforming unit (50) according to a change of the pattern image.

**8.** A control method of a display apparatus, the method comprising:

   processing an image signal to be displayed on a display unit (70) of the display apparatus; and
   adjusting a white balance of the processed image signal by adjusting a white colour of the processed image signal within a colour area defined by a set of adjacent colours in a colour space.

**9.** The control method according to claim 8, wherein the adjusting the white balance comprises:

   setting a colour within the colour area to be a reference colour;
   determining a degree of colour-transformation of other colours within the colour area based on a degree of colour-transformation of the reference colour; and
   colour-transforming a colour within the colour area depending on the determined degree of colour-transformation.

**10.** The control method according to claim 8 or claim 9, wherein the colour space is a YCbCr colour space.

**11.** The control method according to any one of claims 8 to 10, wherein the colour area has an elliptical shape making an acute angle with coordinates of red and blue colours, with a colour temperature axis as a major axis on the YCbCr colour space.

**12.** The control method according to any one of claims 8 to 11, wherein the adjusting the white balance comprises:

   transforming the reference colour so that the reference colour is adjacent to the coordinate of blue colour within the colour area to increase the colour temperature of the white colour; and
   transforming the reference colour so that the reference colour is adjacent to the coordinate of red colour within the colour area to decrease the colour temperature of the white colour.

**13.** The control method according to any one of claims 8 to 12, further comprising receiving a control signal to adjust the colour temperature of the white colour from an external apparatus, wherein the white balance is adjusted the according to the control signal.

**14.** The control method according to any one of claims 8 to 13, further comprising displaying a pattern image on the display unit (70) and determining an adjustment condition of the white balance of the image signal adjusted in the colour transforming unit (50) according to a change of the pattern image.

EP 1 775 965 A1

# FIG. 1

100

| 200 | 10 | 30 | 50 | 70 |

| EXTERNAL APPARATUS | SIGNAL INPUT UNIT | SIGNAL PROCESSING UNIT | COLOR TRANSFORMING UNIT | DISPLAY UNIT |

CONTROLLING UNIT

90

# FIG. 2A

# FIG. 2B

# FIG. 3

START

S11 — IMAGE SIGNAL INPUT? — NO

YES

S13 — PROCESS IMAGE SIGNAL FOR DISPLAYING ON DISPLAY UNIT

S15 — INPUT OF CONTROL SIGNAL TO ADJUST WHITE BALANCE OF PROCESSED IMAGE SIGNAL? — NO

YES

S17 — DETERMINE COLOR AREA OF PREDETERMINED WHITE COLOR OF COLORS OF IMAGE SIGNAL

S19 — TRANSFORM COLOR WITHIN COLOR AREA OF WHITE COLOR AND ADJUST WHITE BALANCE

END

**European Patent Office**

**EUROPEAN SEARCH REPORT**

Application Number

EP 06 12 1982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/020736 A1 (KIMURA KATSUNOBU [JP] ET AL) 30 January 2003 (2003-01-30)<br>* paragraphs [0036], [0037], [0045] - [0050] * | 1-3,8-10 | INV.<br>H04N9/73 |
| X | US 6 862 012 B1 (FUNAKOSHI AKIHIRO [JP] ET AL) 1 March 2005 (2005-03-01)<br>* column 3, line 26 - line 56 *<br>* column 4, line 52 - column 5, line 14 *<br>* column 5, line 39 - line 50 *<br>* column 7, line 54 - column 8, line 23 * | 1,8 | |
| X | EP 1 531 630 A (FUJITSU GENERAL LTD [JP]) 18 May 2005 (2005-05-18)<br>* paragraphs [0020], [0040] * | 1,8 | |
| X | JP 07 023414 A (HITACHI LTD; HITACHI VIDEO & INF SYST) 24 January 1995 (1995-01-24)<br>* the whole document * | 1,8 | |
| A | WO 00/70597 A (KONINKL PHILIPS ELECTRONICS NV [NL]) 23 November 2000 (2000-11-23)<br>* abstract; figure 1 * | 1,8 | TECHNICAL FIELDS SEARCHED (IPC)<br><br>H04N |

The present search report has been drawn up for all claims

| Place of search | Date of completion of the search | Examiner |
|---|---|---|
| The Hague | 30 January 2007 | Pigniez, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 1982

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2007

| Patent document cited in search report | Publication date | Patent family member(s) | Publication date |
|---|---|---|---|
| US 2003020736 A1 | 30-01-2003 | CN 1400823 A | 05-03-2003 |
| | | CN 1568017 A | 19-01-2005 |
| | | CN 1901681 A | 24-01-2007 |
| | | EP 1289315 A2 | 05-03-2003 |
| | | JP 3760815 B2 | 29-03-2006 |
| | | JP 2003047020 A | 14-02-2003 |
| | | KR 20030011217 A | 07-02-2003 |
| | | KR 20040048882 A | 10-06-2004 |
| | | KR 20040084877 A | 06-10-2004 |
| | | KR 20050014915 A | 07-02-2005 |
| | | KR 20060002004 A | 06-01-2006 |
| | | KR 20060052752 A | 19-05-2006 |
| | | US 2005219420 A1 | 06-10-2005 |
| US 6862012 B1 | 01-03-2005 | CN 1293521 A | 02-05-2001 |
| | | JP 3433406 B2 | 04-08-2003 |
| | | JP 2001119717 A | 27-04-2001 |
| | | KR 20010040042 A | 15-05-2001 |
| | | TW 483283 B | 11-04-2002 |
| EP 1531630 A | 18-05-2005 | AU 2004229062 A1 | 02-06-2005 |
| | | CN 1617599 A | 18-05-2005 |
| | | JP 2005151074 A | 09-06-2005 |
| | | KR 20050046544 A | 18-05-2005 |
| | | US 2005104895 A1 | 19-05-2005 |
| JP 7023414 A | 24-01-1995 | NONE | |
| WO 0070597 A | 23-11-2000 | JP 2002544572 T | 24-12-2002 |
| | | US 6657611 B1 | 02-12-2003 |

EPO FORM P0459

For more details about this annex : see Official Journal of the European Patent Office, No. 12/82